# EUROPEAN PATENT APPLICATION

(11) **EP 2 789 805 A1**
(43) Date of publication of application: **15.10.2014**
(21) Application number: 14164268.6
(22) Date of filing: 10.04.2014
(51) Int. Cl.: F01D 11/00, F16J 15/32, A46D 3/05, A46D 9/02

(54) **Method for manufacturing channel-type brush seal**

(30) Priority: 10.04.2013 JP 2013082239
(71) Applicant: Kabushiki Kaisha Toshiba, Tokyo 105-8001 (JP)
(72) Inventor: Yamashita, Tatsuo, Tokyo, 105-8001 (JP); Mimura, Yuki, Tokyo, 105-8001 (JP); Iwasaki, Yoshifumi, Tokyo, 105-8001 (JP)
(74) Representative: Henkel, Breuer & Partner

(57) **Abstract**

In a method for manufacturing a channel-type brush seal of an embodiment, a cored bar is made to abut on a bundle of thin wires and the bundle of thin wires is bent at a part at which the cored bar abuts on the bundle of thin wires. Here, the cored bar is made to abut on the bundle of thin wires so that an extending direction of the thin wires in the bundle of thin wires is inclined with respect to an extending direction of the cored bar, and then the bundle of thin wires is bent, to thereby make extending directions of the bent thin wires intersect. Next, the channel is bent so that the channel sandwiches and fastens the bundle of thin wires and the cored bar at a part at which the bundle of thin wires is bent.

## Description

### FIELD

Embodiments described herein relate generally to a method for manufacturing a channel-type brush seal.

### BACKGROUND

In a rotary machine such as a steam turbine, a gas turbine, an air compressor, and a pump, a sealing device is disposed for sealing between a rotating body and a stationary body. For example, when an inside of a pressure container is partitioned into a plurality of regions by a pressure barrier, and a rotating shaft passes through a through hole of the pressure barrier in the inside of the pressure container, the sealing device is disposed in the through hole of the pressure barrier. Accordingly, a working fluid is prevented from being leaked along the rotating shaft from a high-pressure region to a low-pressure region via the pressure barrier, in the inside of the pressure container.

As the sealing device, a brush seal is used, for example. The brush seal is classified broadly into a weld-type brush seal and a channel-type brush seal.

Out of the above, the weld-type brush seal is formed in a manner that one end part of a bundle of thin wires (bristles) is sandwiched by a pair of plates and welded.

On the other hand, the channel-type brush seal is formed in a manner that a bundle of thin wires is bent so as to cover a cored bar (mandrel), and at a bent part of the bundle of thin wires, a channel (iron band) is bent so as to sandwich and fasten the bundle of thin wires and the cored bar.

In the above-described channel-type brush seal, there has been proposed an "inclination type" in which an extending direction of the bundle of thin wires is not made to be orthogonal but is inclined with respect to an extending direction of the cored bar, for reducing an abrasion amount of the thin wires. In the channel-type brush seal of "inclination type", the extending direction of the thin wires is inclined with respect to a normal direction of ain outer peripheral surface of a rotating shaft so that tips of the thin wires are positioned forward, in a rotational direction of the rotating shaft, with respect to rear ends of the thin wires on the channel side, in a periphery of the outer peripheral surface of the rotating shaft. When manufacturing the channel-type brush seal of "inclination type", a pair of cored bars are first attached to a jig, and the jig is rotated to make a continuous thin wire to be wound around the cored bars. Next, one of the cored bars and the thin wire wound around the cored bar are moved in parallel with the other cored bar and thin wire to make the thin wire to be inclined with respect to the cored bar. Next, the cored bar and the thin wire are caulked from the outside by the channel, and the thin wire is cut. Next, the channel is shaped by being bent in a ring shape, to thereby complete the formation of channel-type brush seal of "inclination type".

As described above, when manufacturing the channel-type brush seal of "inclination type", the jig of large size is required.

Accordingly, there is a case where it is not possible to easily conduct a manufacture, and thus it is difficult to improve a manufacturing efficiency. As a result of this, it is sometimes not easy to conduct the manufacture in an inexpensive manner.

### BRIEF DESCRIPTION OF THE DRAWINGS

FIG. 1 is a sectional diagram illustrating a rotary machine according to an embodiment.
FIG. 2 is a diagram illustrating a detailed configuration of a brush seal in the rotary machine according to the embodiment.
FIG. 3 is a diagram illustrating a detailed configuration of the brush seal in the rotary machine according to the embodiment.
FIG. 4A and FIG. 4B are diagrams each illustrating a manufacturing process of the brush seal in the rotary machine according to the embodiment.
FIG. 5A and FIG. 5B are diagrams each illustrating a manufacturing process of the brush seal in the rotary machine according to the embodiment.
FIG. 6A and FIG. 6B are diagrams each illustrating a manufacturing process of the brush seal in the rotary machine according to the embodiment.
FIG. 7A and FIG. 7B are diagrams each illustrating a manufacturing process of the brush seal in the rotary machine according to the embodiment.

### DETAILED DESCRIPTION

A channel-type brush seal of the present embodiment is disposed in a manner that an extending direction of thin wires is inclined with respect to a radial direction of a rotating body so that, in a periphery of a rotation surface of the rotating body, tip portions of a bundled plurality of thin wires are positioned forward, in a rotational direction of the rotating body, with respect to rear end portions of the thin wires on a channel side. In a method for manufacturing the channel-type brush seal of the present embodiment, in a thin wire bending step, a cored bar is made to abut on a bundle of thin wires, and the bundle of thin wires is then bent at a part at which the cored bar abuts on the bundle of thin wires. Next, in a channel bending step, a channel is bent so that the channel sandwiches and fastens the bundle of thin wires and the cored bar at a part at which the bundle of thin wires is bent. Here, in the thin wire bending step, the cored bar is made to abut on the bundle of thin wires to make an extending direction of the thin wires in the bundle of thin wires to be inclined with respect to an extending direction of the cored bar, and then the bundle of thin wires is bent to make extending directions of the bent thin wires intersect.

Embodiments will be explained with reference to the drawings.

### [A] Configuration

### [A-1] Rotary machine 1

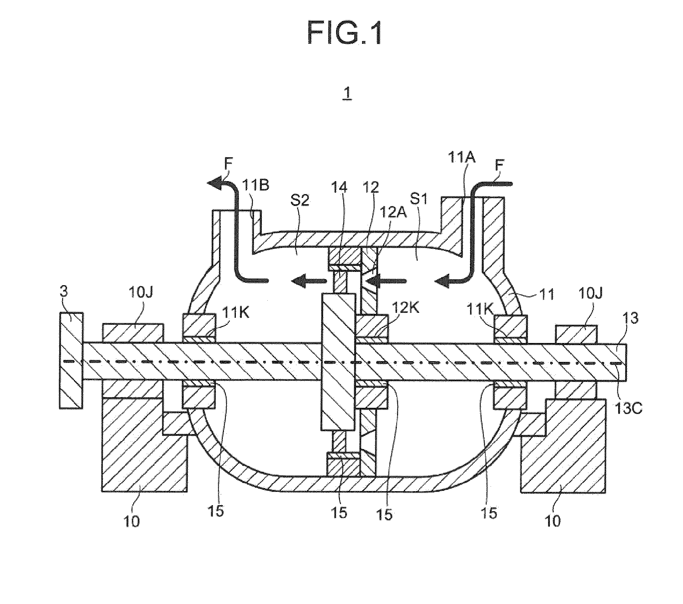

FIG. 1 is a sectional diagram illustrating a rotary machine according to an embodiment.

As illustrated in FIG. 1, a rotary machine 1 is a turbine of axial flow type, and is provided with support tables 10, a pressure container 11, a pressure barrier 12, a rotating shaft 13 (rotating body), turbine blades 14 (rotor blades), and brush seals 15.

Respective parts that form the rotary machine 1 will be explained in order.

In the rotary machine 1, a pair of the support tables 10 are placed so as to sandwich the pressure container 11, and support the pressure container 11. Besides, the support tables 10 have bearings 10J, and support the rotating shaft 13 with the use of the bearings 10J.

The pressure container 11 is a container having a cylindrical shape, and has the pressure barrier 12 disposed in an inside thereof. A pair of through holes 11K are formed on both ends in a horizontal direction of the pressure container 11, and the rotating shaft 13 passes through the pair of through holes 11K in the horizontal direction. Other than the above, a supply port 11A and a discharge port 11B are respectively formed on upper parts of the pressure container 11.

The pressure barrier 12 is a circular plate-shaped body, and divides an internal space of the pressure container 11 into a high-pressure chamber S1 and a low-pressure chamber S2. A through hole 12K is formed at a center part of the pressure barrier 12, and the rotating shaft 13 passes through the through hole 12K. Further, in the pressure barrier 12, nozzle blades 12A (stationary blades) are arranged. A plurality of the nozzle blades 12A (stationary blades) are disposed so as to be arranged around an outer peripheral surface (rotation surface) of the rotating shaft 13.

The rotating shaft 13 is a columnar stick-shaped body, in which both end parts thereof project from the inside to the outside of the pressure container 11, and the both end parts are supported by the bearings 10J of the support tables 10. Although illustration is omitted, one end of the rotating shaft 13 is coupled to a rotating shaft of a power generator (illustration is omitted), for example.

In the inside of the pressure container 11, a plurality of the turbine blades 14 are disposed by being arranged around the outer peripheral surface (rotation surface) of the rotating shaft 13.

The brush seal 15 is disposed in an inside of each of the pair of through holes 11K, in the pressure container 11, through which the rotating shaft 13 passes, and seals between an inner peripheral surface of the through hole 11K and the outer peripheral surface of the rotating shaft 13. Further, the brush seal 15 is disposed in an inside of the through hole 12K, in the pressure barrier 12, through which the rotating shaft 13 passes, and seals between an inner peripheral surface of the through hole 12K and the outer peripheral surface of the rotating shaft 13. A detailed configuration of the brush seal 15 will be described later.

In the above-described rotary machine 1, for example, a steam flows into the inside of the pressure container 11 from the supply port 11A as a working fluid F. Further, the working fluid F sequentially flows through the high-pressure chamber S1 and the low-pressure chamber S2 in the inside of the pressure container 11. At this time, the working fluid F flows from the nozzle blades 12A (stationary blades) to the turbine blades 14 (rotor blades) and expands, which rotates the rotating shaft 13. By the rotation of the rotating shaft 13, for example, a power generator (illustration is omitted) is driven, and a power generation is conducted. Subsequently, the working fluid F flows out to the outside of the pressure container 11 from the discharge port 11B.

Further, in the above-described rotary machine 1, the brush seal 15 prevents the leakage of the working fluid F from the inside to the outside of the pressure container 11, in each of the pair of through holes 11K formed on the pressure container 11. Other than the above, the brush seal 15 prevents the leakage of the working fluid F from the high-pressure chamber S 1 to the low-pressure chamber S2, in the through hole 12K formed on the pressure barrier 12.

### [A-2] Detailed configuration of brush seal 15

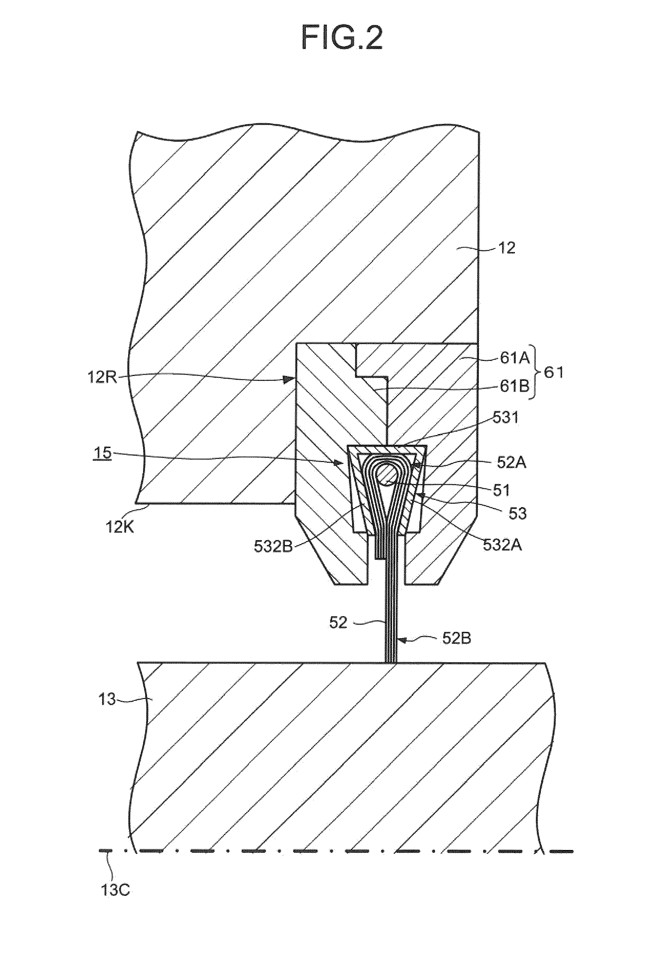

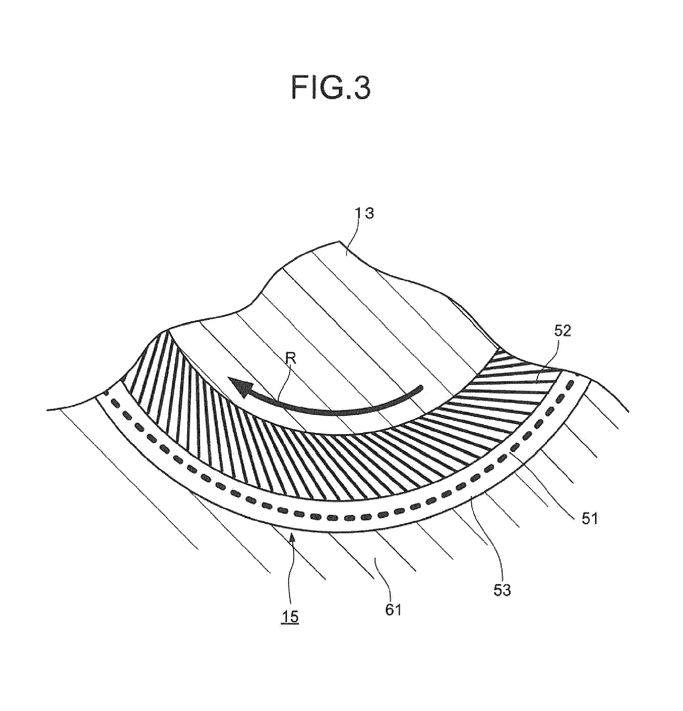

FIG. 2 and FIG. 3 are diagrams each illustrating a detailed configuration of the brush seal 15 in the rotary machine according to the embodiment.

Here, FIG. 2 illustrates a cross section of a plane along an axial direction of the rotating shaft 13, and illustrates the brush seal 15 disposed in the pressure barrier 12 in an enlarged manner. On the contrary, FIG. 3 is a sectional diagram of a plane orthogonal to the axial direction of the rotating shaft 13, and illustrates a part of the brush seal 15 disposed in the pressure barrier 12 in an enlarged manner. Note that although illustration is omitted, a detailed configuration of each of the brush seals 15 disposed in the pressure container 11 is similar to that of the brush seal 15 disposed in the pressure barrier 12.

As illustrated in FIG. 2 and FIG. 3, the brush seal 15 is a channel-type brush seal, and has a cored bar 51, thin wires 52, and a channel 53.

As illustrated in FIG. 2, the brush seal 15 is fixed to a brush holder 61. In this case, the brush holder 61 has a high-pressure-side brush holder part 61 A and a low-pressure-side brush holder part 61B, and the brush seal 15 is sandwiched between the high-pressure-side brush holder part 61A and the low-pressure-side brush holder part 61B. Further, the brush holder 61 is fixed to a recessed part 12R formed on the inner peripheral surface of the through hole 12K of the pressure barrier 12.

Further, as illustrated in FIG. 3, the brush seal 15 is disposed so as to surround a periphery of the outer peripheral surface (rotation surface) of the rotating shaft 13 (rotating body).

The respective parts that form the brush seal 15 will be described in order.

### [A-2-1] Cored bar 51 (mandrel)

As illustrated in FIG. 2 and FIG. 3, the cored bar 51 is a columnar stick-shaped body, and is formed of a metal material, for example.

Further, as illustrated in FIG. 3, the cored bar 51 extends along a rotational direction R in which the rotating shaft 13 rotates, so as to make a circle around the outer peripheral surface of the rotating shaft 13.

### [A-2-2] Thin wire 52

As illustrated in FIG. 2 and FIG. 3, a plurality of thin wires 52 are bundled, and the bundle of thin wires 52 forms brush bristles (bristles). The thin wire 52 is, for example, a wire strand formed of a metal material.

As illustrated in FIG. 2, the bundle of thin wires 52 includes a bent part 52A and an extended part 52B.

In the bent part 52A of the bundle of thin wires 52, the plurality of thin wires 52 are bent so as to cover a periphery of the cored bar 51, as illustrated in FIG. 2.

Meanwhile, in the extended part 52B of the bundle of thin wires 52, the plurality of thin wires 52 extend, from the bent part 52A, along a plane orthogonal to a rotation center axis 13C of the rotating shaft 13, as illustrated in FIG. 2. In the extended part 52B, tip portions of the plurality of thin wires 52 positioned on the side of the rotating shaft 13, are brought into contact with the outer peripheral surface of the rotating shaft 13.

Further, as illustrated in FIG. 3, the bundle of thin wires 52 is disposed so as to surround the periphery of the outer peripheral surface of the rotating shaft 13. In the bundle of thin wires 52, the position of the extended part 52B is closer to the side of the rotating shaft 13, compared to the position of the bent part 52A, and the plurality of thin wires 52 are arranged so as to be aligned along the rotational direction R of the rotating shaft 13, in the periphery of the outer peripheral surface of the rotating shaft 13.

As illustrated in FIG. 3, in the present embodiment, an extending direction (longitudinal direction) in which the plurality of thin wires 52 extend in the extended part 52B of the bundle of thin wires 52 is not along a radial direction of the rotating shaft 13 but is inclined with respect to the radial direction of the rotating shaft 13. Specifically, in the extended part 52B of the bundle of thin wires 52, the plurality of thin wires 52 are not parallel but are inclined with respect to a normal direction of the outer peripheral surface of the rotating shaft 13. Here, the extended part 52B of the thin wires 52 is inclined so that tips (free ends) of the plurality of thin wires 52 are positioned forward, in the rotational direction R of the rotating shaft 13, with respect to rear ends (fixed ends) of the thin wires on the side of the channel 53.

For example, it is suitable that the thin wires 52 are inclined by about 20° to 70° with respect to the normal direction of the outer peripheral surface of the rotating shaft 13.

### [A-2-3] Channel 53 (iron band)

As illustrated in FIG. 2 and FIG. 3, the channel 53 is made by bending and shaping a plate-shaped body, and is formed of a metal material, for example.

As illustrated in FIG. 2, the channel 53 has a rear part 531 and a pair of side parts 532A and 532B, and at the bent part 52A of the bundle of thin wires 52, the plurality of thin wires 52 and the cored bar 51 are sandwiched, fastened, and fixed by the channel 53.

In the channel 53, the rear part 531 is positioned on the bent part 52A of the bundle of the thin wires 52, and faces the outer peripheral surface of the rotating shaft 13, as illustrated in FIG. 2.

In the channel 53, the pair of side parts 532A and 532B sandwich the bent part 52A of the bundle of thin wires 52, at sides of the bent part 52A of the bundle of thin wires 52, as illustrated in FIG. 2. The pair of side parts 532A and 532B face each other in the rotational direction R of the rotating shaft 13. Further, the pair of side parts 532A and 532B respectively extend downward from a right end and a left end, respectively, of the rear part 531, in a manner that they are not along the plane orthogonal to the rotation center axis 13C of the rotating shaft 13 but are inclined with respect to the plane. Here, the pair of side parts 532A and 532B are inclined so that a distance between lower ends is narrower than a distance between upper ends, and the lower ends are positioned on the inside compared to the upper ends.

Further, similar to the cored bar 51, the channel 53 extends along the rotational direction R in which the rotating shaft 13 rotates, so as to make a circle around the outer peripheral surface of the rotating shaft 13, as illustrated in FIG. 3.

### [B] Manufacturing method

A method for manufacturing the above-described brush seal 15 will be descried.

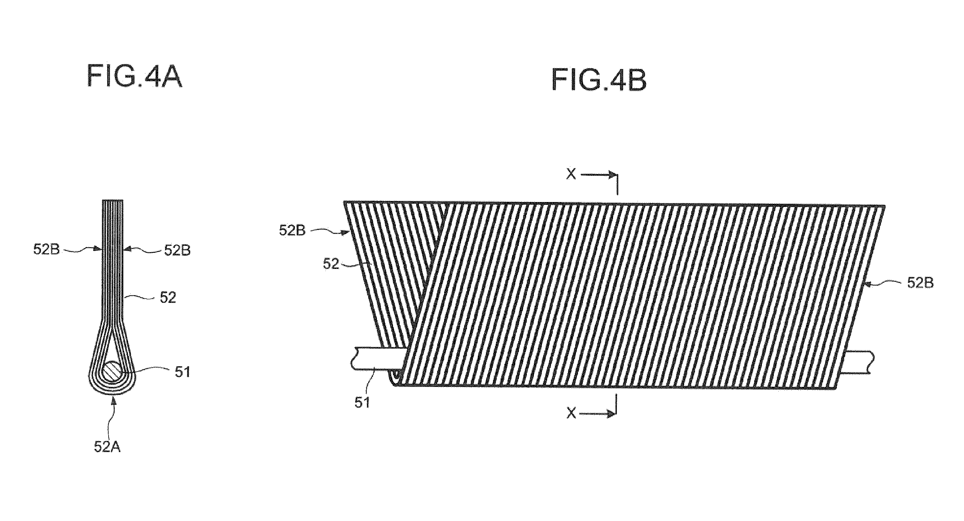

FIG. 4A, FIG. 4B, FIG. 5A, FIG. 5B, FIG. 6A, FIG. 6B, FIG. 7A, and FIG. 7B are diagrams illustrating manufacturing processes of the brush seal 15 in the rotary machine according to the embodiment.

In each of the drawings, a part of the brush seal 15 produced in the manufacturing processes of the brush seal 15 is illustrated. Each of FIG. 4A, FIG. 5A, FIG. 6A, and FIG. 7A corresponds to a cross section of a plane along the axial direction of the rotating shaft 13, similar to FIG. 2. Further, each of FIG. 4B, FIG. 5B, FIG. 6B, and FIG. 7B corresponds to a plane orthogonal to the axial direction of the rotating shaft 13, similar to FIG. 3, and a cross section along X-X part of each of the drawings corresponds to each of FIG. 4A, FIG. 5A, FIG. 6A, and FIG. 7A.

In the present embodiment, respective manufacturing processes illustrated in the respective drawings are conducted in order, to thereby manufacture the above-described brush seal 15.

Details of the respective manufacturing processes will be described in order.

### [B-1] Thin wire bending step

First, as illustrated in FIG. 4A and FIG. 4B, the cored bar 51 is made to abut on the bundle of thin wires 52, and then the bundle of thin wires 52 is bent at a part at which the cored bar 51 abuts on the bundle of thin wires 52.

Here, there are prepared a linearly extending cored bar 51, and a linearly extending bundle of thin wires 52 with a certain length. Further, the cored bar 51 is made to abut on the bundle of thin wires 52 so that an extending direction (longitudinal direction) in which the thin wires 52 in the bundle of thin wires 52 extend is not orthogonal but is inclined with respect to an extending direction (longitudinal direction) of the cored bar 51. In the present embodiment, the cored bar 51 is made to abut on a center part in the extending direction of the thin wires 52 in the bundle of thin wires 52. Further, in a state in which the cored bar 51 is made to abut, the bundle of thin wires 52 is bent to cover a periphery of the cored bar 51 by the bundle of thin wires 52.

Accordingly, in the bent bundle of thin wires 52, the extending directions of the thin wires 52 intersect at the bent part. Specifically, a pair of extended parts 52B of the bundle of thin wires 52 respectively extend in different directions from the bent part 52A, and are overlapped.

### [B-2] Channel bending step

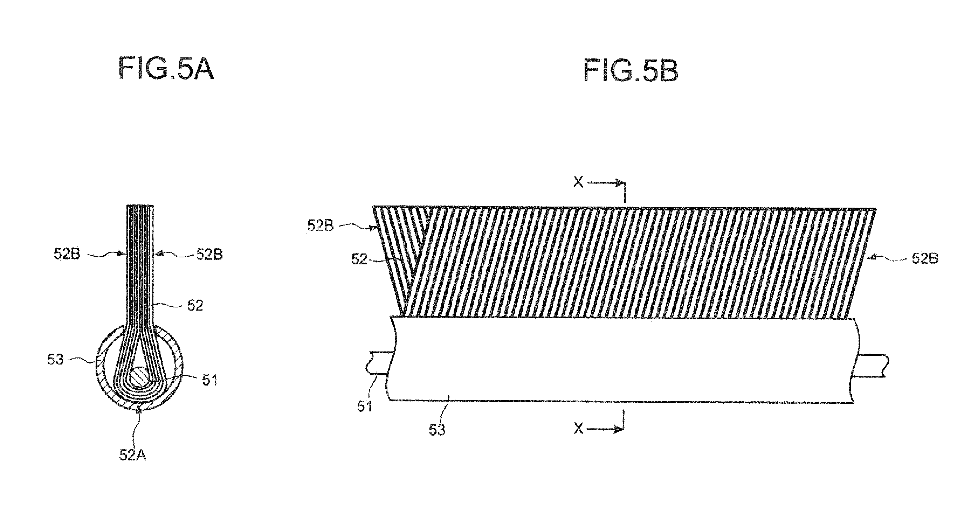

Next, as illustrated in FIG. 5A and FIG. 5B, the channel 53 is bent so that the channel 53 sandwiches and fastens the bundle of thin wires 52 and the cored bar 51 at the bent part 52A of the bundle of thin wires 52.

Here, the channel 53 being a linearly extending plate-shaped body is prepared. Further, the bent part 52A of the bundle of thin wires 52 is made to abut on an upper surface of the channel 53 so that the cored bar 51 extends along an extending direction of the channel 53 at a center part in a width direction of the channel 53. Further, in a state in which the bent part 52A of the bundle of thin wires 52 is made to abut, the channel 53 is subjected to bending. For example, the channel 53 is subjected to roll caulking.

Accordingly, the channel 53 is processed in a cylindrical shape so as to surround a periphery of the bundle of thin wires 52 and the cored bar 51 at the bent part 52A of the bundle of thin wires 52, in a state where the pair of extended parts 52B of the bundle of thin wires 52 project upward.

### [B-3] Cutting step

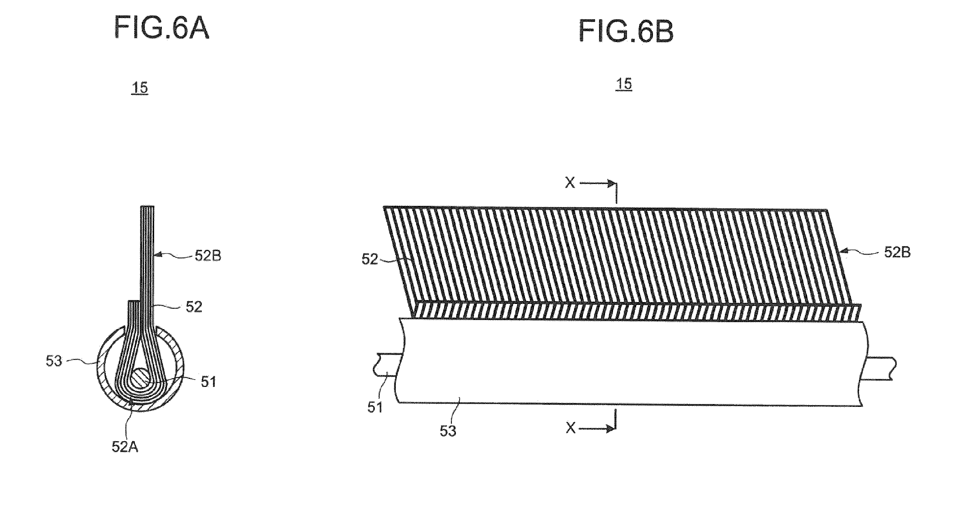

Next, as illustrated in FIG. 6A and FIG. 6B, one of the extended parts 52B, out of the pair of extended parts 52B extending in the different directions in the bent bundle of thin wires 52, is cut.

Here, the one of the extended parts 52B is cut in the vicinity of an edge of the channel 53 so that the one of the extended parts 52B becomes shorter than the other extended part 52B in the bundle of thin wires 52. Accordingly, the channel-type brush seal 15 of "inclination type" is produced in a linear shape.

### [B-4] Shaping step

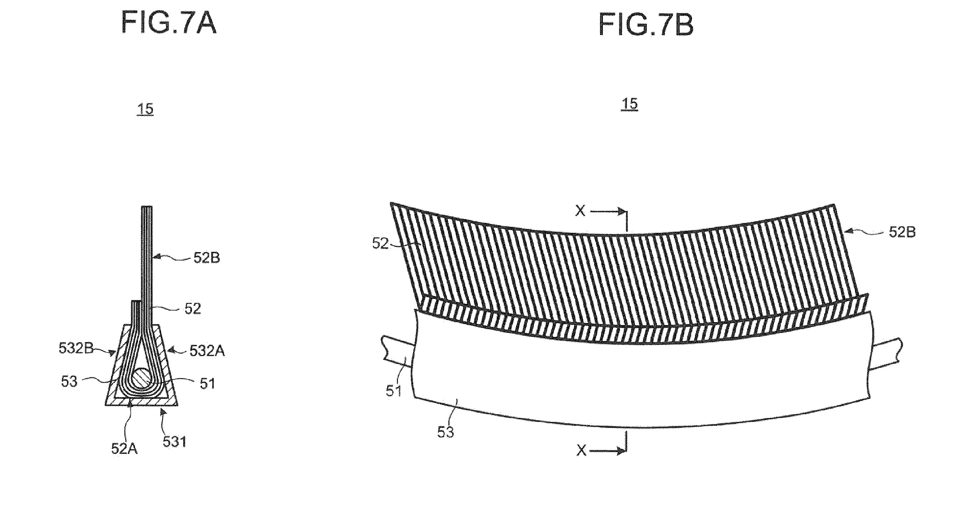

Next, as illustrated in FIG. 7A and FIG. 7B, the channel-type brush seal 15 of "inclination type" produced in a linear shape as described above is shaped by being bent so as to be along the outer peripheral surface of the rotating shaft 13.

Here, the shaping is conducted so that the channel 53 has the rear part 531 and the pair of side parts 532A and 532B.

Together with the above, the channel-type brush seal 15 of "inclination type" is shaped in a ring shape so that the cored bar 51 and the channel 53 make a circle around the outer peripheral surface of the rotating shaft 13, as illustrated in FIG. 3.

### [C] Summary

As described above, the rotary machine 1 of the present embodiment has the channel-type brush seals 15 (refer to FIG. 1 and FIG. 2). The channel-type brush seal 15 is the one of "inclination type", in which the extending direction (longitudinal direction) of the thin wires 52 is inclined with respect to the radial direction of the rotating shaft 13 so that the tips of the bundled plurality of thin wires 52 are positioned forward, in the rotational direction R of the rotating shaft 13, with respect to the rear ends of the thin wires on the side of the channel 53, in the periphery of the outer peripheral surface (rotation surface) of the rotating shaft 13 (rotating body). Specifically, the extending direction of the thin wires 52 is inclined with respect to the normal direction of the outer peripheral surface of the rotating shaft 13 (refer to FIG. 3). For this reason, in the above description, when the bundle of thin wires 52 is brought into contact with the outer peripheral surface of the rotating shaft 13, the thin wires 52 are easily bent and deformed, so that a repulsive force is small. As a result of this, the abrasion of contact portions of the thin wires 52 is difficult to occur, so that the leakage of working fluid F can be effectively prevented.

The channel-type brush seal 15 of "inclination type" is manufactured through the respective manufacturing processes described above (refer to FIGS. 4 to FIGS. 7). Concretely, at first, the cored bar 51 is made to abut on the bundle of thin wires 52 so that the extending direction of the thin wires 52 in the bundle of thin wires 52 is inclined with respect to the extending direction of the cored bar 51, and the bundle of thin wires 52 is bent. Next, the channel 53 is bent so that the channel 53 sandwiches and fastens the bundle of thin wires 52 and the cored bar 51 at the bent part 52A of the bundle of thin wires 52. Next, in the bent bundle of thin wires 52, one of the pair of extended parts 52B extending in the different directions is cut from the edge of the channel 53, to thereby manufacture the channel-type brush seal 15. After that, the manufactured channel-type brush seal 15 is shaped by being bent so as to be along the outer peripheral surface of the rotating shaft 13.

As described above, in the present embodiment, a large-sized jig is not required when manufacturing the channel-type brush seal of "inclination type". Further, in the present embodiment, a large-scale apparatus such as a welding apparatus and a heat treatment apparatus used when manufacturing a weld-type brush seal is not required.

Therefore, in the present embodiment, it is possible to easily conduct the manufacture of the channel-type brush seal of "inclination type", and to improve the manufacturing efficiency. As a result of this, in the present embodiment, it is possible to reduce a manufacturing cost of the channel-type brush seal of "inclination type".

### [D] Modified examples

### [D-1] Modified example 1

The above-described embodiment explains a case where the pair of extended parts 52B extending in the different directions from the bent part 52A have mutually the same length when bending the bundle of thin wires 52 in the thin wire bending step. However, the present invention is not limited to this. It is also possible that the lengths of the pair of extended parts 52B are different when bending the bundle of thin wires 52. Specifically, although the cored bar 51 is made to abut on the center part, in the extending direction of the thin wires 52, of the bundle of thin wires 52 in the present embodiment, the present invention is not limited to this. For example, it is also possible that the cored bar 51 is made to abut on an upper part or a lower part, in the extending direction of the thin wires 52, of the bundle of thin wires 52.

### [D-2] Modified example 2

The above-described embodiment explains a case where the one of the extended parts 52B, out of the pair of extended parts 52B of the bundle of thin wires 52, is cut in the cutting step. However, the present invention is not limited to this. The one of the extended parts 52B does not have to be cut, if not necessary. For example, if the lengths of the pair of extended parts 52B are mutually different when bending the bundle of thin wires 52 as in the above-described modified example, the cutting does not have to be conducted. Other than the above, when the lengths of the thin wires 52 of the other extended part 52B are adjusted, it is possible to cut the other extended part 52B, as a matter of course.

### [D-3] Modified example 3

The above-described embodiment illustrates a case where the plurality of thin wires 52 of the extended part 52B in the bundle of thin wires 52 extend in parallel with the plane orthogonal to the rotation center axis 13C of the rotating shaft 13 (refer to FIG. 2). However, the present invention is not limited to this. It is also possible that the plurality of thin wires 52 are inclined with respect to the plane orthogonal to the rotation center axis 13C of the rotating shaft 13. In this case, it is preferable that the plurality of thin wires 52 are inclined so that the tips of the plurality of thin wires 52 are positioned on the side of the high-pressure chamber S1 with respect to the rear ends of the thin wires positioned on the channel side. The tips of the plurality of thin wires 52 are pressed against the outer peripheral surface of the rotating shaft 13 because of a differential pressure force generated by a differential pressure between the high-pressure chamber S1 and the low-pressure chamber S2, so that the sealing can be effectively performed.

### [D-4] Modified example 4

The above-described embodiment explains a case where the rotary machine 1 is a steam turbine. However, the present invention is not limited to this. The rotary machine 1 may also be a rotary machine other than the steam turbine, such as a gas turbine, an air compressor, and a pump.

### <Others>

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A method for manufacturing a channel-type brush seal disposed to make an extending direction of a bundled plurality of thin wires to be inclined with respect to a radial direction of a rotating body so that tip portions of the bundled plurality of thin wires are positioned forward, in a rotational direction of the rotating body, with respect to rear end portions of the thin wires on a channel side, in a periphery of a rotation surface of the rotating body, the method comprising:
a thin wire bending step of bending, after making a cored bar abut on the bundle of thin wires, the bundle of thin wires at a part at which the cored bar abuts on the bundle of thin wires; and
a channel bending step of bending the channel so that the channel sandwiches and fastens the bundle of thin wires and the cored bar at a part at which the bundle of thin wires is bent in the thin wire bending step,
wherein, in the thin wire bending step, the cored bar is made to abut on the bundle of thin wires to make the extending direction of the thin wires in the bundle of thin wires to be inclined with respect to an extending direction of the cored bar, and then the bundle of thin wires is bent to make extending directions of the bent thin wires intersect.

2. The method for manufacturing the channel-type brush seal according to claim 1, further comprising
a cutting step of cutting, after bending the channel in the channel bending step, at least one of a pair of extended parts in the bundle of thin wires bent in the thin wire bending step so that the one of the pair of extended parts extending in different directions from a bent part becomes shorter than the other.

3. The method for manufacturing the channel-type brush seal according to claim 1 or 2, further comprising
a shaping step of shaping the channel-type brush seal formed in the channel bending step by making the channel-type brush seal to be bent to be along the rotation surface of the rotating body.

4. The method for manufacturing the channel-type brush seal according to any one of claims 1 to 3,
wherein, in the thin wire bending step, the cored bar is made to abut on a part, in the bundle of thin wires, positioned at a center in the extending direction of the thin wires.
